# EUROPEAN PATENT APPLICATION

(11) **EP 4 621 193 A1**
(43) Date of publication of application: **24.09.2025**
(21) Application number: 25164574.3
(22) Date of filing: 18.03.2025
(51) Int. Cl.: F01D 25/24, F02C 7/20, F02K 1/80

(54) **AIRCRAFT POWERPLANT WITH JOINT SHIELD**

(30) Priority: 19.03.2024 US 202418609824
(71) Applicant: PRATT & WHITNEY CANADA CORP., Longueuil, Québec J4G 1A1 (CA)
(72) Inventor: OZOG, Mateusz, (01BE5) Longueuil, J4G 1A1 (CA); ALAVIJEH, Maryam Shafiei, (01BE5) Longueuil, J4G 1A1 (CA)
(74) Representative: Dehns

(57) **Abstract**

An assembly for an aircraft propulsion system includes an outer wall structure and an inner wall structure (56). The outer wall structure extends axially along and circumferentially about an axis (12). The outer wall structure forms an outer peripheral boundary of a flowpath (44). The inner wall structure (56) extends axially along and circumferentially about the axis (12). The inner wall structure (56) is spaced radially in from the outer wall structure. The inner wall structure (56) includes a first case (74), a second case (75) and a shield (78). The first case (74) forms a first section (150) of an inner peripheral boundary (70) of the flowpath (44). The second case (75) is attached to the first case (74) at a joint (118). The shield (78) covers the joint (118) and is arranged radially between the joint (118) and the flowpath (44).

## Description

### TECHNICAL FIELD

The invention relates generally to an assembly for an aircraft propulsion system and, more particularly, to a flowpath wall for an aircraft powerplant.

### BACKGROUND INFORMATION

An aircraft powerplant may include various internal flowpaths. Each flowpath may be formed by one or more wall structures. Various types and configurations of wall structures are known in the art. While these known wall structures have various benefits, there is still room in the art form improvement.

### SUMMARY

According to an aspect of the present invention, an assembly is provided for an aircraft propulsion system. This assembly includes an outer wall structure (a radially outer wall structure) and an inner wall structure (a radially inner wall structure). The outer wall structure extends axially along and circumferentially about (around) an axis. The outer wall structure forms an outer peripheral boundary (a radially outer boundary) of a flowpath. The inner wall structure extends axially along and circumferentially about (around) the axis. The inner wall structure is spaced radially in (inwards) from the outer wall structure. The inner wall structure includes a first case, a second case and a shield. The first case forms a first section of an inner peripheral boundary (a radially inner boundary) of the flowpath. The second case is attached to the first case at a joint (e.g., by or through a joint between the first case and the second case). The shield covers (extends over) the joint and is arranged radially between the joint and the flowpath.

According to another aspect of the present invention, another assembly is provided for an aircraft propulsion system. This assembly includes a powerplant core and a wall structure. The powerplant core includes a compressor section, a combustor section and a turbine section. The wall structure is radially outboard (spaced radially outwards) of, extends along and circumscribes the powerplant core. The wall structure includes a first case, a second case and a shield. The second case is attached to the first case at a bolted flange connection between the first case and the second case. The shield is radially outboard (spaced radially outwards) of and covers (extends over) the bolted flange connection. The shield is attached to the first case and the second case through the bolted flange connection.

According to still another aspect of the present invention, another assembly is provided for an aircraft propulsion system. This assembly includes a combustor and a wall structure. The combustor is disposed in a diffuser plenum. The wall structure is outboard (e.g., radially outboard or spaced radially outwards) of the combustor and forms an outer peripheral boundary (a radially outer boundary) of the diffuser plenum. The wall structure includes a first case, a second case and a shield outside of the diffuser plenum. The first case includes a first case wall and a first case flange that projects (extends) out from the first case wall. The second case includes a second case wall and a second case flange that projects (extends) out from the second case wall. The second case flange is bolted to the first case flange at a bolted connection. The shield extends along and circumferentially around the bolted connection. The shield is attached to the first case and the second case through the bolted connection.

**In** any of the aspects or embodiments described above and herein, the first case may form a first section of an inner peripheral boundary (a radially inner boundary) of a flowpath. **In** any of the aspects or embodiments described above and herein, the shield may form a second section of the inner peripheral boundary of the flowpath that extends axially out from the first section.

**In** any of the aspects or embodiments described above and herein, the joint may be a bolted flange connection between the first case and the second case.

**In** any of the aspects or embodiments described above and herein, the first case may include a first case wall and a first case flange projecting (extending) radially outward from the first case wall at (proximate or adjacent to) an axial end (a first axial end, e.g., an aft end) of the first case. **In** any of the aspects or embodiments described above and herein, the second case may include a second case wall and a second case flange projecting (extending) radially outward from the second case wall at (proximate or adjacent to) an axial end (a second axial end, e.g., a forward end) of the second case. **In** any of the aspects or embodiments described above and herein, the first case flange may be fastened (e.g., mechanically fastened) to the second case flange at the joint.

**In** any of the aspects or embodiments described above and herein, the shield may include a shield wall and a shield flange. **In** any of the aspects or embodiments described above and herein, the shield wall may axially and circumferentially cover (extend over) the first case flange and the second case flange. In any of the aspects or embodiments described above and herein, the shield flange may project (extend) radially inward from the shield wall. In any of the aspects or embodiments described above and herein, the shield flange may be fastened (e.g., mechanically fastened) to the first case flange and/or the second case flange.

In any of the aspects or embodiments described above and herein, the inner wall structure may also include a plurality of mechanical fasteners. In any of the aspects or embodiments described above and herein, each of the mechanical fasteners may project (extend) axially through the first case flange, the second case flange and the shield flange.

In any of the aspects or embodiments described above and herein, the shield wall may be configured with a plurality of ports. In any of the aspects or embodiments described above and herein, each of the ports may be open and aligned (e.g., circumferentially and/or radially aligned) with a respective one of the mechanical fasteners.

In any of the aspects or embodiments described above and herein, the first case may be upstream of the second case along the flowpath. In any of the aspects or embodiments described above and herein, the first case flange may be between the second case flange and the shield flange.

In any of the aspects or embodiments described above and herein, the first case may be upstream of the second case along the flowpath. In any of the aspects or embodiments described above and herein, the second case flange may be between the first case flange and the shield flange.

In any of the aspects or embodiments described above and herein, the shield may form a second section of the inner peripheral boundary of the flowpath located next to (e.g., axially and/or radially adjacent) and downstream of the first section (e.g., downstream along the flowpath).

In any of the aspects or embodiments described above and herein, the second section may have a straight line sectional geometry at least a portion of along a length of the shield.

In any of the aspects or embodiments described above and herein, the second section may have a convex sectional geometry along at least a portion of a length of the shield.

In any of the aspects or embodiments described above and herein, the first case may be upstream of the second case along the flowpath. The second section may taper radially inward as the shield extends axially towards the first case.

In any of the aspects or embodiments described above and herein, the shield may be configured from or otherwise include a ceramic material.

In any of the aspects or embodiments described above and herein, the shield may be configured from or otherwise include a metal material.

In any of the aspects or embodiments described above and herein, the shield may be configured from or otherwise include a composite material.

In any of the aspects or embodiments described above and herein, the assembly may also include a powerplant core. In any of the aspects or embodiments described above and herein, the flowpath may be disposed radially outboard (radially outwards) of the powerplant core.

In any of the aspects or embodiments described above and herein, the assembly may also include a combustor disposed within a diffuser plenum. In any of the aspects or embodiments described above and herein, the first case and/or the second case may form an outer peripheral boundary (a radially outer boundary) of the diffuser plenum.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft powerplant.
FIG. 2 is a sectional illustration of a portion of the aircraft powerplant at a covered joint in an inner wall structure.
FIGS. 3-5 are sectional illustrations of respective portions of the aircraft powerplant at the covered joint with various alternative configurations.

### DETAILED DESCRIPTION

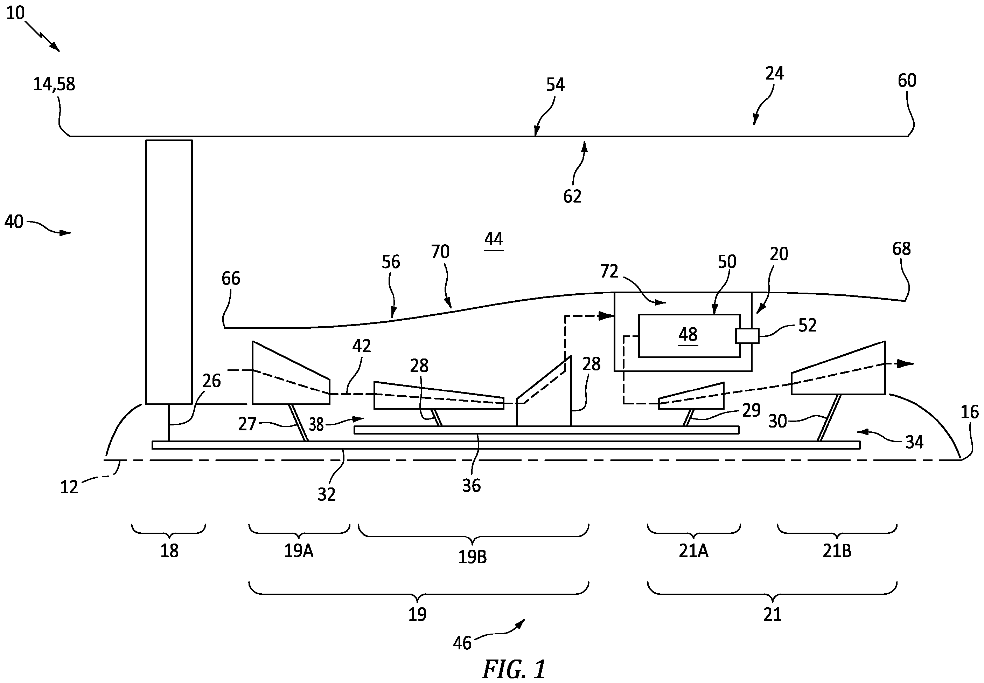

FIG. 1 illustrates a powerplant 10 for an aircraft. The aircraft may be an airplane, a drone (e.g., an unmanned aerial vehicle (UAV)) or any other manned or unmanned aerial vehicle or system. The aircraft powerplant 10 may be configured as, or included as part of, a propulsion system for the aircraft. The aircraft powerplant 10 may also or alternatively be configured as, or included as part of, an electrical power system for the aircraft. However, for ease of description, the aircraft powerplant 10 is described below as the aircraft propulsion system.

The aircraft powerplant 10 extends axially along an axis 12 between an upstream, forward end 14 of the aircraft powerplant 10 and a downstream, aft end 16 of the aircraft powerplant 10. Briefly, the axis 12 may be a centerline axis of the aircraft powerplant 10 and/or one or more of its structures and/or components. The axis 12 may also or alternatively be a rotational axis of one or more structures and/or components of the aircraft powerplant 10.

The aircraft powerplant 10 may be configured as or otherwise include a turbofan gas turbine engine. The aircraft powerplant 10 of FIG. 1, for example, includes a fan section 18, a compressor section 19, a combustor section 20 and a turbine section 21. The compressor section 19 of FIG. 1 includes a low pressure compressor (LPC) section 19A and a high pressure compressor (HPC) section 19B. The turbine section 21 of FIG. 1 includes a high pressure turbine (HPT) section 21A and a low pressure turbine (LPT) section 21B. These propulsion system sections 18, 19A, 19B, 20, 21A and 21B are arranged within a powerplant housing 24; e.g., an engine housing.

Each of the powerplant sections 18, 19A, 19B, 21A and 21B includes a respective bladed rotor 26-30. Each of these bladed rotors 26-30 includes a plurality of rotor blades (e.g., airfoils, vanes, etc.) and one or more rotor bases (e.g., disks, hubs, etc.). The rotor blades are arranged circumferentially around the respective rotor base(s) in one or more arrays. Each rotor blade is connected to and projects out from the respective rotor base.

The fan rotor 26 and the LPC rotor 27 are coupled to and rotatable with the LPT rotor 30. The fan rotor 26 and the LPC rotor 27 of FIG. 1, for example, are connected to the LPT rotor 30 through a low speed shaft 32. At least (or only) the fan rotor 26, the LPC rotor 27, the LPT rotor 30 and the low speed shaft 32 may collectively form a low speed rotating assembly 34; e.g., a low speed spool of the aircraft powerplant 10. Similarly, the HPC rotor 28 is coupled to and rotatable with the HPT rotor 29. The HPC rotor 28 of FIG. 1, for example, is connected to the HPT rotor 29 through a high speed shaft 36. At least (or only) the HPC rotor 28, the HPT rotor 29 and the high speed shaft 36 may collectively form a high speed rotating assembly 38; e.g., a high speed spool of the aircraft powerplant 10. The rotating assemblies 34 and 38 are rotatably supported by a plurality of bearings (not shown). Each of these bearings is connected to the powerplant housing 24 by at least one stationary structure such as, for example, an annular support frame. Each of the rotating assemblies 34, 38 may thereby be rotatable about the axis 12 within the powerplant housing 24.

During operation, ambient air enters the aircraft powerplant 10 through an airflow inlet 40 at the powerplant forward end 14. This air is directed through the fan section 18 and into a (e.g., annular) core flowpath 42 and a (e.g., annular) bypass flowpath 44. The core flowpath 42 extends sequentially through the powerplant sections 19A, 19B, 20, 21A and 21B; e.g., a core 46 and/or gas generator of the aircraft powerplant 10. The air within the core flowpath 42 may be referred to as "core air". The bypass flowpath 44 extends through a bypass duct that bypasses (e.g., is radially outboard of and extends axially along) the powerplant core 46. The air within the bypass flowpath 44 may be referred to as "bypass air".

The core air is compressed by the LPC rotor 27 and the HPC rotor 28 and directed into a (e.g., annular) combustion chamber 48 of a (e.g., annular) combustor 50 in the combustor section 20. Fuel is injected into the combustion chamber 48 by one or more fuel injectors 52 (one visible in FIG. 1) and the fuel is mixed with the compressed core air to provide a fuel-air mixture. This fuel-air mixture is ignited and combustion products thereof flow through and sequentially drive rotation of the HPT rotor 29 and the LPT rotor 30. The rotation of the HPT rotor 29 and the LPT rotor 30 respectively drive rotation of the HPC rotor 28 and the LPC rotor 27 and, thus, compression of the air received from an inlet into the core flowpath 42. The rotation of the LPT rotor 30 also drives rotation of the fan rotor 26. The rotation of the fan rotor 26 propels the bypass air through and out of the bypass flowpath 44. The propulsion of the bypass air may account for a majority of thrust generated by the aircraft powerplant 10.

The powerplant housing 24 of FIG. 1 includes a radial outer wall structure 54 and a radial inner wall structure 56. The outer wall structure 54 extends axially along the axis 12 from an upstream, forward end 58 of the outer wall structure 54 to a downstream, aft end 60 of the outer wall structure 54. Here, the outer wall structure forward end 58 is also the powerplant forward end 14. The outer wall structure aft end 60 is disposed proximate, but may be axially recessed forward from, the powerplant aft end 16. The outer wall structure 54 is spaced radially outboard from the fan rotor 26 and the inner wall structure 56. The outer wall structure 54 extends circumferentially about (e.g., circumscribes) the axis 12, the fan rotor 26, the powerplant core 46 and the inner wall structure 56. With this arrangement, an axial forward section of the outer wall structure 54 forms a fan case for and houses the fan rotor 26. An axial aft section of the outer wall structure 54 forms a (e.g., tubular) radial outer peripheral boundary 62 of the bypass flowpath 44 within the aircraft powerplant 10.

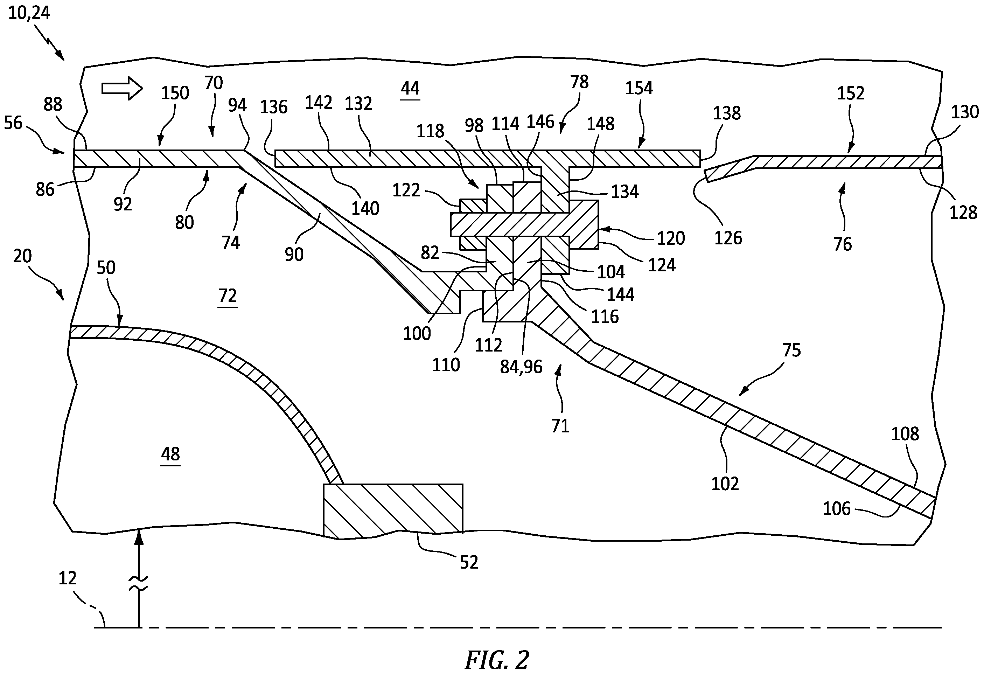

The inner wall structure 56 extends axially along the axis 12 from an upstream, forward end 66 of the inner wall structure 56 to a downstream, aft end 68 of the inner wall structure 56. Here, the inner wall structure forward end 66 is disposed downstream, aft of and may be next to (e.g., adjacent) the fan rotor 26. The inner wall structure aft end 68 is disposed proximate, but may be axially recessed forward from, the powerplant aft end 16. Note, while the inner wall structure aft end 68 of FIG. 1 is axially aligned with the outer wall structure aft end 60, the present invention is not limited to such an exemplary arrangement. The inner wall structure 56 is spaced radially outboard of the LPC rotor 27, the HPC rotor 28, the combustor 50, the HPT rotor 29 and the LPT rotor 30. The inner wall structure 56 extends circumferentially about (e.g., circumscribes) the axis 12 and the powerplant members 27-30 and 50. With this arrangement, the inner wall structure 56 may form a casing structure for and house the powerplant members 27-30 and 50. The inner wall structure 56 forms a (e.g., tubular) radial inner peripheral boundary 70 of the bypass flowpath 44 within the aircraft powerplant 10 that is radially opposite the outer peripheral boundary 62 of the bypass flowpath 44. Referring to FIG. 2, the inner wall structure 56 may also form a (e.g., tubular) radial outer peripheral boundary 71 of a (e.g., annular) diffuser plenum 72 along the core flowpath 42. Here, the combustor 50 is disposed (or projects into) in the diffuser plenum 72, and the diffuser plenum 72 supplies the compressed core air for introduction into the combustion chamber 48.

The inner wall structure 56 of FIG. 2 includes one or more powerplant cases 74-76 and a joint shield 78; e.g., a flowpath baffle. The forward case 74 of FIG. 2 includes a forward case wall 80 ("forward wall") and a forward case flange 82 ("forward flange"). The forward wall 80 extends axially along the axis 12 to an axial aft end 84 of the forward case 74. The forward wall 80 extends radially between and to a radial inner side 86 of the forward case 74 and its forward wall 80 and a radial outer side 88 of the forward wall 80. The forward wall 80 extends circumferentially about (e.g., completely around) the axis 12 providing this forward wall 80 with, for example, a full-hoop (e.g., tubular) geometry. An axial aft section 90 of the forward wall 80 of FIG. 2 radially tapers inwards (e.g., towards the axis 12) as that aft section 90 of the forward wall 80 extends axially from an axial forward section 92 of the forward wall 80 towards (e.g., to or about) the forward case aft end 84. The forward wall 80 at (e.g., on, adjacent or proximate) the forward case aft end 84 is thereby radially recessed inward from the forward wall 80 along the forward section 92 of the forward wall 80 / at an intersection 94 between the forward wall sections 90 and 92.

The forward flange 82 is disposed at the forward case aft end 84. An axial side 96 of the forward flange 82 of FIG. 2, for example, may partially form the forward case aft end 84. The forward flange 82 is connected to (e.g., formed integral with or otherwise attached to) the forward wall 80 and its aft section 90. The forward flange 82 of FIG. 2 projects radially out (outward away from the axis 12) from the aft section 90 of the forward wall 80 at the forward wall outer side 88 to a distal radial outer end 98 of the forward flange 82. This forward flange 82 extends axially along the axis 12 between opposing axial sides 96 and 100 of the forward flange 82. The forward flange 82 extends circumferentially about (e.g., completely around) the axis 12 providing this forward flange 82 with, for example, a full-hoop (e.g., annular) geometry.

The aft-inner case 75 of FIG. 2 includes an aft-inner case wall 102 ("inner wall") and an aft-inner case flange 104 ("inner flange"). The inner wall 102 extends axially along the axis 12 to an axial forward end 110 of the aft-inner case 75. The inner wall 102 extends radially between and to a radial inner side 106 of the aft-inner case 75 and its inner wall 102 and a radial outer side 108 of the inner wall 102. The inner wall 102 extends circumferentially about (e.g., completely around) the axis 12 providing this inner wall 102 with, for example, a full-hoop (e.g., tubular) geometry. At least an axial forward section of the inner wall 102 of FIG. 2 radially expands outwards (e.g., away from the axis 12) as that forward section of the inner wall 102 extends axially towards (e.g., to or about) the aft-inner case forward end 110.

The inner flange 104 is disposed at the aft-inner case forward end 110. An axial side 112 of the inner flange 104 of FIG. 2, for example, is (e.g., slightly) recessed from the aft-inner case forward end 110. The inner flange 104 is connected to (e.g., formed integral with or otherwise attached to) the inner wall 102 and its forward section. The inner flange 104 of FIG. 2 projects radially out (outward away from the axis 12) from the forward section of the inner wall 102 at the aft-inner wall outer side 108 to a distal radial outer end 114 of the inner flange 104. This inner flange 104 extends axially along the axis 12 between opposing axial sides 112 and 116 of the inner flange 104. The inner flange 104 extends circumferentially about (e.g., completely around) the axis 12 providing this inner flange 104 with, for example, a full-hoop (e.g., annular) geometry.

The aft-inner case 75 is attached to the forward case 74 at a joint 118 between the forward case 74 and the aft-inner case 75. This joint 118 may be a bolt-flange joint, or alternatively another type of mechanical inter-case connection / splice. The side 112 of the inner flange 104 of FIG. 2, for example, is disposed axially next to and engages (e.g., abuts against, contacts, etc.) the side 96 of the forward flange 82. A plurality of fasteners 120 (e.g., bolts) (one visible in FIG. 2) are arranged circumferentially about the axis 12 in an annular array; e.g., a circular array. Each of the fasteners 120 of FIG. 2 projects through the inner flange 104 and the forward flange 82 and is mated with a respective nut 122. The inner flange 104 and the forward flange 82 may thereby be bolted together; e.g., axially clamped between a head 124 of each fastener 120 and the respective nut 122.

The aft-outer case 76 of FIG. 2 extends axially along the axis 12 to an axial forward end 126 of the aft-outer case 76. This aft-outer case forward end 126 may be disposed proximate, but aft of the joint 118 along the axis 12 and downstream of the joint 118 along the bypass flowpath 44. The aft-outer case 76 extends radially between and to a radial inner side 128 of the aft-outer case 76 and a radial outer side 130 of the aft-outer case 76. The aft-outer case 76 extends circumferentially about (e.g., completely around) the axis 12 providing this aft-outer case 76 with, for example, a full-hoop (e.g., tubular) geometry. The aft-outer case 76 is disposed radially outboard of the aft-inner case 75. The aft-outer case 76 of FIG. 2 may thereby axially overlap and circumscribe the aft-inner case 75 aft and downstream of the joint 118.

The joint shield 78 is configured to cover the joint 118 along the bypass flowpath 44. The joint shield 78, for example, is configured to form a baffle between the bypass air flowing through the bypass flowpath 44 and the joint 118. The joint shield 78 of FIG. 2 includes a shield wall 132 and a shield flange 134.

The shield wall 132 extends axially along the axis 12 from an axial forward end 136 of the joint shield 78 and its shield wall 132 to an axial aft end 138 of the joint shield 78 and its shield wall 132. The shield wall 132 extends radially between and to a radial inner side 140 of the shield wall 132 and a radial outer side 142 of the joint shield 78 and its shield wall 132. The shield wall 132 extends circumferentially about (e.g., completely around) the axis 12 providing the shield wall 132 with, for example, a full-hoop (e.g., tubular) geometry.

The shield flange 134 of FIG. 2 is disposed at an intermediate location between the shield forward end 136 and the shield aft end 138. The shield flange 134 of FIG. 2, for example, is located (e.g., slightly) axially aft of center between the shield forward end 136 and the shield aft end 138. It is contemplated, however, the shield flange 134 may alternatively be located (e.g., slightly) axially forward of center, or centered, between the shield forward end 136 and the shield aft end 138. The shield flange 134 is connected to (e.g., formed integral with or otherwise attached to) the shield wall 132. The shield flange 134 of FIG. 2 projects radially out (inward towards the axis 12) from the shield wall 132 at the intermediate location to a distal radial inner end 144 of the shield flange 134. This shield flange 134 extends axially along the axis 12 between opposing axial sides 146 and 148 of the shield flange 134. The shield flange 134 extends circumferentially about (e.g., completely around) the axis 12 providing this shield flange 134 with, for example, a full-hoop (e.g., annular) geometry.

The joint shield 78 is attached to the forward case 74 and/or the aft-inner case 75 at the joint 118. The side 146 of the shield flange 134 of FIG. 2, for example, is disposed axially next to and engages (e.g., abuts against, contacts, etc.) the side 96 of the inner flange 104. The inner flange 104 of FIG. 2 is thereby disposed and clamped axially between the forward flange 82 and the shield flange 134. Each fastener 120 of FIG. 2, for example, projects through the shield flange 134 in addition to the other joint flanges 104 and 82, where the flanges 134, 104 and 82 are axially clamped sequentially between each fastener head 124 and the respective nut 122. It is contemplated, however, the joint shield 78 may alternatively be otherwise attached to one or more members of the inner wall structure 56.

The joint shield 78 of FIG. 2 extends axially across and may substantially (or partially) bridge an axial gap between the forward case 74 and its forward wall 80 and the aft-outer case 76. The shield forward end 136 of FIG. 2, for example, is disposed axially next to and may be (e.g., slightly) spaced axially aft and downstream from the intersection 94 between the forward wall sections 90 and 92. Here, the shield wall 132 at the shield forward end 136 may be radially aligned with (e.g., flush with) or (e.g., slightly) radially recessed from the forward section 92 of the forward wall 80 at the intersection 94 between the forward wall sections 90 and 92. The shield aft end 138 of FIG. 2 is disposed axially next to and may be (e.g., slightly) spaced axially forward and upstream from the aft-outer case 76 at its aft-outer case forward end 126. Here, the shield wall 132 at the shield aft end 138 may be radially aligned with (e.g., flush with) or (e.g., slightly) radially outboard from the aft-outer case 76 at its aft-outer case forward end 126.

With the foregoing arrangement, the forward case 74, the aft-outer case 76 and the joint shield 78 may collectively form at least a portion (or an entirety) of the inner peripheral boundary 70 of the bypass flowpath 44. The forward case 74 and its forward section 92 of the forward wall 80 of FIG. 2, for example, form a forward section 150 of the inner peripheral boundary 70 of the bypass flowpath 44. The aft-outer case 76 forms an aft section 152 of the inner peripheral boundary 70 of the bypass flowpath 44. The joint shield 78 and its shield wall 132 form an intermediate section 154 of the inner peripheral boundary 70 of the bypass flowpath 44. This boundary intermediate section 154 extends axially between and may substantially bridge the axial gap between a downstream, aft end of the boundary forward section 150 and an upstream, forward end of the boundary aft section 152. The joint shield 78 may thereby maintain an air gap between the joint 118 and the bypass air flowing through the bypass flowpath 44. The joint shield 78 may also or alternatively deflect the bypass air flowing through the bypass flowpath 44 away from the joint 118. The joint 118 therefore is not (e.g., at least directly) exposed to the bypass air flowing within the bypass flowpath 44. Moreover, since the joint shield 78 covers the joint 118, the bypass air is reflected and heat transfer may be significantly decreased within the protected cavity surrounding the joint 118.

Reducing or eliminating the exposure of the bypass air to the joint 118 may reduce a thermal gradient across the joint 118. For example, with the arrangement of FIG. 2, the forward wall 80 and the inner wall 102 are exposed to the relatively warm compressed core air within the diffuser plenum 72. Heat energy from the core air may transfer into the forward wall 80 and the inner wall 102, and some of this heat energy may then transfer into (via conduction) the flanges 82 and 104. The members of the inner wall structure 56 along the inner peripheral boundary 70 of the bypass flowpath 44, on the other hand, are exposed to the relatively cool bypass air within the bypass flowpath 44. Without the joint shield 78 of FIG. 2, the ends of the unshielded flanges may be (e.g., rapidly) cooled by the bypass air. The unshielded flanges may thereby be subject to a relatively large thermal gradient which increases thermally induces stresses within the joint. The joint shield 78, however, provides a buffer between the joint 118 and the relatively cool bypass air.

In some embodiments, each of the inner wall structure members 74-76 and 78 may be constructed from a metal material; e.g., pure metal, a metal alloy, etc. In other embodiments, the joint shield 78 may alternatively be constructure from a ceramic material (e.g., a monolithic ceramic, a ceramic matrix composite (CMC), etc.) or another relatively low thermally conductive material such as a composite material (e.g., a fiber-reinforced composite material). In such embodiments, the material of the joint shield 78 may be selected to thermally insulate the joint 118 from the bypass air.

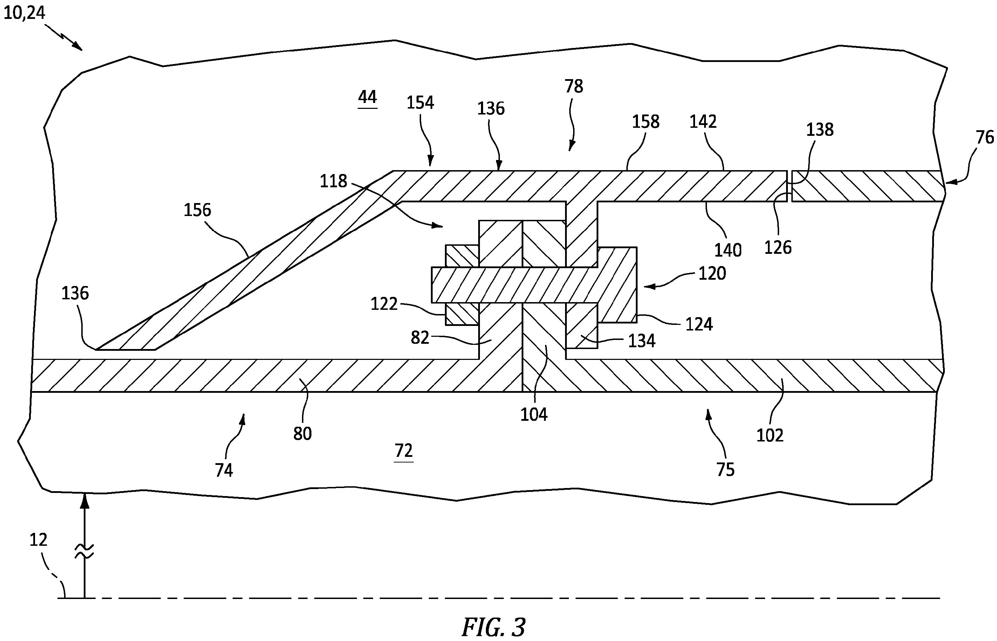

In some embodiments, referring to FIG. 2, at least a portion or an entirety of the boundary intermediate section 154 may have a straight line sectional geometry when viewed, for example, in a reference plane parallel with (e.g., including) the axis 12. Here, the shield outer side 142 forms a cylindrical flowpath surface where a radius from the axis 12 to the shield outer side 142 may remain uniform (e.g., constant) as the shield wall 132 extends axially between the shield ends 136 and 138. In other embodiments, referring to FIG. 3, at least a portion or an entirety of the boundary intermediate section 154 may have a (e.g., generally) convex and/or tapered sectional geometry when viewed, for example, in the reference plane. The boundary intermediate section 154 of FIG. 3, for example, radially tapers (towards the axis 12) as an axial forward section 156 of the shield wall 132 extends axially from an axial aft section 158 of the shield wall 132 to (or towards) the shield forward end 136. The forward section 156 of the shield wall 132 may form a frustoconical flowpath surface. The aft section 158 of the shield wall 132, on the other hand, may form a cylindrical flowpath surface, or a curved surface with a reduced slope along the axis 12.

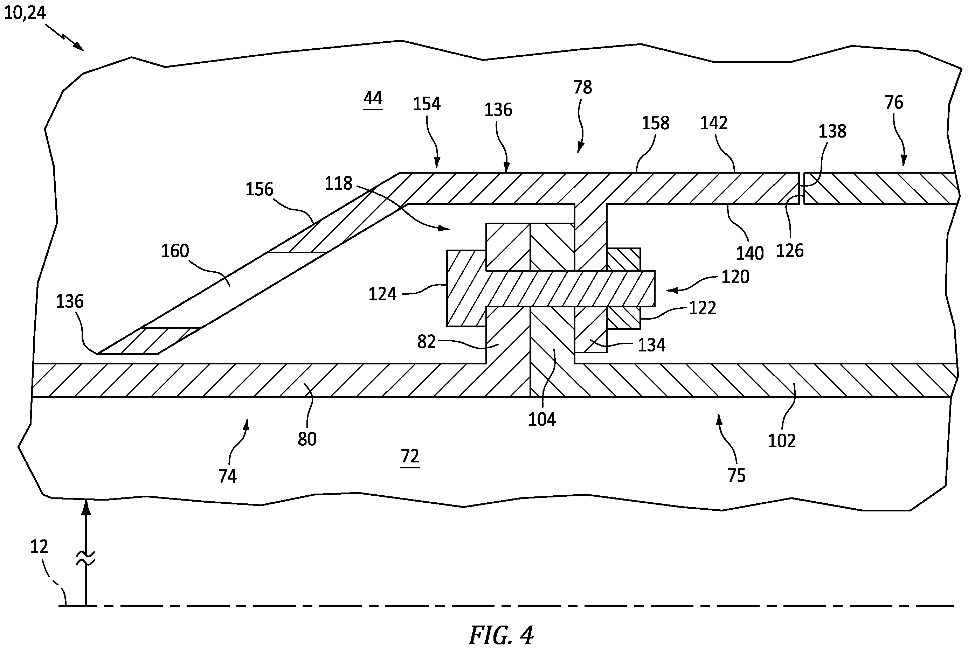

In some embodiments, referring to FIGS. 2 and 3, the shield wall 132 may be axially and/or circumferentially uninterrupted. In other embodiments, referring to FIG. 4, the shield wall 132 may be configured with one or more (e.g., open, empty) ports 160. Each of these ports 160 extends (e.g., axially) through the shield wall 132 and may be (e.g., radially and/or circumferentially) aligned with a respective one of the fasteners 120. Each port 160 may thereby provide access to the respective fastener 120 for installation of the joint shield 78 and/or assembly of the joint 118.

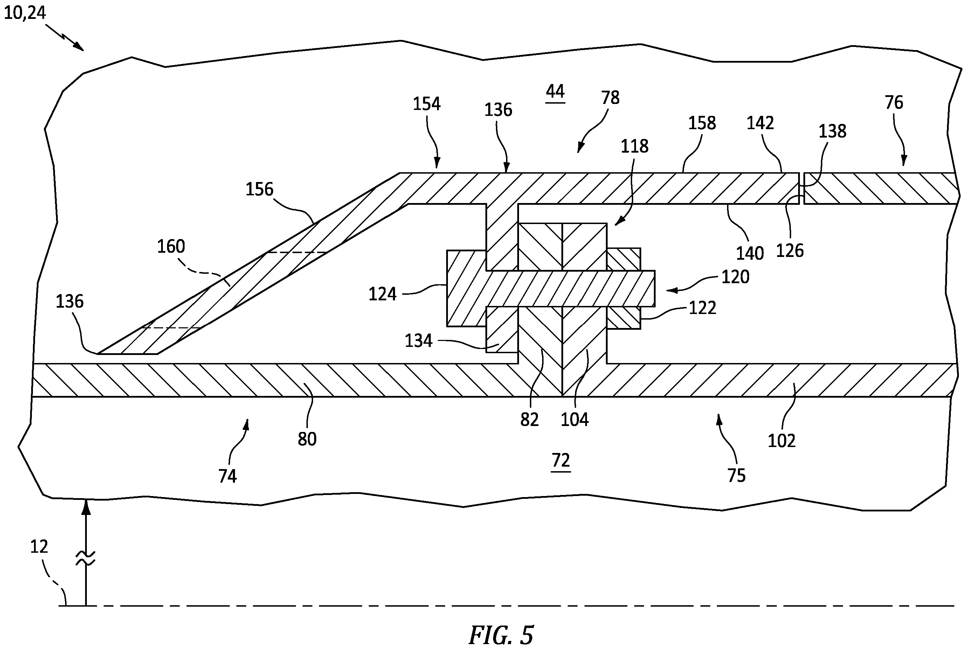

In some embodiments, referring to FIGS. 2 and 3, the shield flange 134 may be disposed downstream, axially aft of the flanges 82 and 104 at the joint 118. In other embodiments, referring to FIG. 5, the shield flange 134 may be disposed upstream, axially forward of the flanges 82 and 104 at the joint 118. In still other embodiments, it is contemplated the shield flange 134 may alternatively be arranged axially between the flanges 82 and 104 at the joint 118.

While the joint shield 78 is shown at a joint adjacent and radially outboard of the diffuser plenum 72 in FIG. 2, the present invention is not limited to such an exemplary arrangement. The joint shield 78, for example, may alternatively be arranged with and cover another joint upstream or downstream of the joint 118 of FIG. 2. In another example, the joint shield 78 may be configured to cover a joint along the outer wall structure 54. While the joint shield 78 is described above as shielding a joint along the bypass flowpath 44, it is contemplated the joint shield 78 may alternatively cover a joint along another (e.g., annular) flowpath within the aircraft powerplant 10; e.g., a cooling flowpath, a third stream flowpath, etc. Moreover, while the aircraft powerplant 10 is described above as a turbofan gas turbine engine, it is contemplated the joint shield 78 may also be included in various other types of aircraft powerplants. Examples of these other aircraft powerplants include, but are not limited to, a turbojet gas turbine engine, a turboshaft gas turbine engine and a turboprop gas turbine engine. In some embodiments, the turbine engine may be a direct drive turbine engine. In other embodiments, the turbine engine may be a geared turbine engine with a geartrain (e.g., an epicyclic gear system) between a turbine rotor and a drive rotor; e.g., a fan rotor and/or a compressor rotor. The present invention therefore is not limited to any particular types or configurations of aircraft powerplants.

In some embodiments, the joint shield 78 may be configured as an uninterrupted full-hoop (e.g., annular) body. In other embodiments, the joint shield 78 may be configured as a segmented body. The joint shield 78, for example, may include a plurality of (e.g., arcuate) segments which are arranged circumferentially end-to-end to collectively provide the joint shield 78 with a segmented full-hoop body.

While various embodiments of the present invention have been described, it will be apparent to those of ordinary skill in the art that many more embodiments and implementations are possible within the scope of the claims. For example, the present disclosure as described herein includes several aspects and embodiments that include particular features. Although these features may be described individually, it is within the scope of the present invention that some or all of these features may be combined with any one of the aspects and remain within the scope of the invention defined by the claims. Accordingly, the present disclosure is not to be restricted except in light of the attached claims.

## Claims

1. An assembly for an aircraft propulsion system, the assembly comprising:
an outer wall structure (54) extending axially along and circumferentially around an axis (12), the outer wall structure (54) forming an outer peripheral boundary (62) of a flowpath (44); and
an inner wall structure (56) extending axially along and circumferentially around the axis (12), the inner wall structure (56) being spaced radially in from the outer wall structure (54), and the inner wall structure (56) including a first case (74), a second case (75) and a shield (78), wherein:
the first case (74) forms a first section (150) of an inner peripheral boundary (70) of the flowpath (44);
the second case (75) is attached to the first case (74) at a joint (118); and
the shield (78) covers the joint (118) and is arranged radially between the joint (118) and the flowpath (44).

2. The assembly of claim 1, wherein the joint (118) is a bolted flange connection between the first case (74) and the second case (75).

3. The assembly of claim 1 or 2, wherein:
the first case (74) includes a first case wall (80) and a first case flange (82) projecting radially outward from the first case wall (80) at an axial end (84) of the first case (80);
the second case (75) includes a second case wall (102) and a second case flange (104) projecting radially outward from the second case wall (102) at an axial end (110) of the second case (75); and
the first case flange (82) is mechanically fastened to the second case flange (104) at the joint (118).

4. The assembly of claim 3, wherein:
the shield (78) includes a shield wall (132) and a shield flange (134);
the shield wall (132) axially and circumferentially covers the first case flange (82) and the second case flange (104); and
the shield flange (134) projects radially inward from the shield wall (132), and the shield flange (134) is mechanically fastened to at least one of the first case flange or the second case flange.

5. The assembly of claim 4, wherein the inner wall structure (56) further includes a plurality of mechanical fasteners (120), and each of the plurality of mechanical fasteners (120) projects axially through the first case flange (82), the second case flange (104) and the shield flange (134).

6. The assembly of claim 5, wherein:
the shield wall (132) is configured with a plurality of ports (160); and
each of the plurality of ports (160) is open and aligned with a respective one of the plurality of mechanical fasteners (120).

7. The assembly of any of claims 4 to 6, wherein:
the first case (74) is upstream of the second case (75) along the flowpath (44) and the first case flange (82) is between the second case flange (104) and the shield flange (134); or
the first case (74) is upstream of the second case (75) along the flowpath (44) and the second case flange (104) is between the first case flange (82) and the shield flange (134).

8. The assembly of any preceding claim, wherein the shield (78) forms a second section (154) of the inner peripheral boundary (70) of the flowpath (44) located next to and downstream of the first section (150).

9. The assembly of claim 8, wherein:
the second section (154) has a straight line sectional geometry along at least a portion of a length of the shield (78); and/or
the second section (154) has a convex sectional geometry along at least a portion of a length of the shield (78).

10. The assembly of claim 8 or 9, wherein:
the first case (74) is upstream of the second case (44) along the flowpath (44); and
the second section (154) tapers radially inward as the shield (78) extends axially towards the first case (74).

11. The assembly of any preceding claim, wherein the shield (78) comprises a ceramic material, a metal material and/or a composite material.

12. The assembly of any preceding claim, further comprising:
a powerplant core (46), wherein the flowpath (44) is disposed radially outboard of the powerplant core (46); and/or
a combustor (50) disposed within a diffuser plenum (72), wherein at least one of the first case (74) or the second case (75) forms an outer peripheral boundary (71) of the diffuser plenum (72).

13. The assembly of any preceding claim, wherein the flowpath (44) comprises a bypass flowpath (44).

14. An assembly for an aircraft propulsion system, the assembly comprising:
a powerplant core (46) including a compressor section (19), a combustor section (20) and a turbine section (21); and
a wall structure (74, 75) radially outboard of, extending along and circumscribing the powerplant core (46), the wall structure including a first case (74), a second case (75) and a shield (78), wherein:
the second case (75) is attached to the first case (74) at a bolted flange connection (118) between the first case (74) and the second case (75); and
the shield (78) is radially outboard of and covers the bolted flange connection (118), and the shield (78) is attached to the first case (74) and the second case (75) through the bolted flange connection (118).

15. An assembly for an aircraft propulsion system, the assembly comprising:
a combustor (50) disposed in a diffuser plenum (72); and
a wall structure (74, 75) outboard of the combustor (50) and forming an outer peripheral boundary (71) of the diffuser plenum (72), the wall structure including a first case (74), a second case (75) and a shield (78) outside of the diffuser plenum (72), wherein:
the first case (74) includes a first case wall (80) and a first case flange (82) that projects out from the first case wall (80);
the second case (75) includes a second case wall (102) and a second case flange (104) that projects out from the second case wall (102), the second case flange (104) being bolted to the first case flange (82) at a bolted connection (118); and
the shield (78) extends along and circumferentially around the bolted connection (118) and is attached to the first case (74) and the second case (75) through the bolted connection (118).
